# FASCICULE DE BREVET EUROPEEN

(11) **EP 2 004 768 B1**
(45) Date de publication et mention de la délivrance du brevet: **26.08.2009**
(21) Numéro de dépôt: 07727896.8
(22) Date de dépôt: 06.04.2007
(51) Int. Cl.: C09J 5/00

(54) **PROCEDE D'ASSEMBLAGE DE SUBSTRATS AVEC TRAITEMENTS THERMIQUES A BASSES TEMPERATURES**
VERFAHREN ZUM ASSEMBLIEREN VON SUBSTRATEN MIT WÄRMEBEHANDLUNGEN BEI NIEDRIGEN TEMPERATUREN
METHOD OF ASSEMBLING SUBSTRATES WITH HEAT TREATMENTS AT LOW TEMPERATURES

(30) Priorité: 10.04.2006 FR 0651290
(43) Date de publication de la demande: 24.12.2008
(73) Titulaire: Commissariat à l'Energie Atomique, 75015 Paris (FR)
(72) Inventeur: BENEYTON, Rémi, 38100 Grenoble (FR); MORICEAU, Hubert, 38120 Saint Egreve (FR); FOURNEL, Frank, 38190 Villard-Bonnot (FR); RIEUTORD, François, 38120 Saint Egreve (FR); LE TIEC, Yannick, 38920 Crolles (FR)
(74) Mandataire: Ilgart, Jean-Christophe
(86) Numéro de dépôt international: PCT/EP2007/053428
(87) Numéro de publication internationale: WO 2007/116038

(56) Documents cités:
- FR-A- 2 860 842

## Description

### DOMAINE TECHNIQUE ET ART ANTÉRIEUR

L'invention concerne les techniques d'assemblage de substrats.

En général, un collage entre deux substrats ou surfaces peut être obtenu après une préparation des surfaces leur donnant un caractère soit hydrophile soit hydrophobe.

L'utilisation de traitements thermiques pour renforcer le collage direct peut entraîner, pour un certain nombre de structures collées, l'apparition de défauts à l'interface de collage. Ces défauts sont dus au dégazage de sous produits de la réaction de collage moléculaire : par exemple des molécules d'eau, d'hydrogène ou d'hydrocarbures.

Pour un certain nombre de structures collées, il est connu que ces défauts peuvent être résorbés par des traitements thermiques effectués à des températures très élevées. Ces températures sont par exemple comprises entre 900°C et 1300°C et sont fonction de la préparation des surfaces avant collage. Malheureusement, pour d'autres structures collées, cette solution n'est pas envisageable.

La limitation de l'épaisseur d'oxyde en surface ou la présence de matériaux différents facilite l'apparition de défauts à l'interface de collage.

Dans le cas des films minces (d'épaisseur inférieure à une dizaine de µm ou à quelques dizaines de nm), des traitements thermiques, à des températures inférieures à 1000°C, par exemple comprises entre 600°C et 800°C, entraînent la formation de défauts de collage sous forme de cloques ou de zones sans film adhérent. Ces défauts ne peuvent être supprimés par des traitements thermiques à plus haute température. Par exemple l'éclatement des cloques est favorisé par la finesse des couches. Ces défauts rendent inutilisables les structures produites. Actuellement, ce phénomène limite la production de structures à films d'oxyde, enterrés à l'interface de collage, fins (épaisseur inférieure à 50 nm) voire ultra-fins ou même de couches de Si directement collées sur plaques de Si.

De même, pour des hétérostructures (par exemple Si dopé P collé sur Si dopé N), des traitements thermiques entraînent dans certaines conditions la formation de défauts de collage. Un traitement thermique à haute température (1000°C) entraînerait une inter diffusion des dopants.

Pour certaines hétérostructures, si l'endommagement est trop important lors de traitements thermiques dans la gamme de température inférieure à 800°C, alors on ne peut plus guérir cet endommagement par un traitement entre 1100°C et 1300°C.

Lorsque les traitements thermiques à plus hautes températures ne peuvent pas être utilisés (incompatibilité avec le procédé de réalisation du composant en cours, par exemple), les défauts de collage sont alors rédhibitoires.

Il se pose donc le problème de pouvoir réduire, voire éliminer, dans le cas de collage moléculaire (direct), les défauts dus au dégazage à l'interface de collage.

Les solutions actuellement utilisées pour palier à la formation de défauts résident principalement dans l'élimination de l'eau à l'interface de collage en utilisant en particulier des techniques de collage sous vide très poussé (UHV). Cependant ces techniques ne permettent pas une utilisation industrielle. Il existe aussi des techniques qui consistent à former des canaux à l'interface de collage afin d'évacuer les sous-produits de la réaction de collage moléculaire. Malheureusement de telles techniques sont destructives et posent beaucoup de problèmes pour les applications.

Un problème est donc de trouver une solution de traitement de réduction des défauts permettant une mise en oeuvre industrielle tout en utilisant l'ensemble de la surface.

### EXPOSÉ DE L'INVENTION

Selon l'invention, un procédé de réalisation d'un collage entre un premier et un deuxième substrat comporte :
a) une étape de préparation des surfaces à assembler,
b) un assemblage de ces deux surfaces, par collage moléculaire direct,
c) une étape de traitement thermique comportant au moins un maintien de la température du système ou de l'interface de collage dans la plage 50°C - 100°C pendant au moins une heure.

L'étape c) comporte en outre, après l'étape de maintien de la température dans la plage [50-100°C] pendant au moins 1 heure, une étape de maintien de la température dans la plage strictement supérieure à 100°C, et inférieure à 500°C (soit, alors, dans la plage ]100°C-500°C]) pendant au moins 1 heure.

Par le terme substrat, on entend un substrat massif ou constitué d'un empilement de plusieurs couches de natures différentes.

Ce traitement thermique selon l'invention permet une bonne préparation des conditions de dégazage des surfaces en contact par adhérence moléculaire.

Il permet de minimiser la densité de défauts à l'interface de collage. Dès les basses températures, un tel traitement thermique permet d'éliminer plus facilement les sous - produits de dégazage de l'interface, par diffusion à l'interface de collage.

Les traitements thermiques standards, à plus hautes températures, permettent, quant à eux, d'augmenter les énergies de collage de structures, et/ou de réaliser une fracture dans une zone implantée par une (ou plusieurs) espèce, par exemple gazeuse, préalablement au collage. Un traitement selon l'invention peut donc venir en complément de traitements thermiques standards, à plus hautes températures, qui renforcent le collage.

Des étapes de traitement à une ou des températures plus élevée que 100°C peuvent également avoir été réalisées préalablement à un traitement selon l'étape c) de l'invention.

Selon un mode de réalisation l'invention concerne l'utilisation de traitements thermiques successifs ou cumulatifs, par paliers, par exemple dès les basses températures, inférieures à 100°C ou à 200°C.

Un palier peut comporter une rampe et la température de palier proprement dite, température à laquelle le système est maintenu pendant une certaine durée. Tous ces paramètres (rampe de température en fonction du temps, températures, durées des paliers) peuvent varier dans des gammes assez larges.

Par exemple :
- une rampe peut être aussi lente que 0,1°C/mn,
- les températures successives peuvent être espacées de 1°C ou de quelques °C seulement,
- la durée d'un palier peut être aussi courte que quelques dixièmes de seconde et aussi longue que quelques heures.

Un tel traitement par paliers permet de monter progressivement la température depuis la gamme basse de 50°C - 100°C, et favorise encore plus l'élimination des sous produits de dégazage de l'interface.

L'invention concerne également un procédé de réalisation d'un collage entre un premier et un deuxième substrat, comportant :
- un assemblage de ces deux surfaces, par collage moléculaire direct,
- une étape de traitement thermique, par paliers successifs ou cumulatifs.

Un tel traitement permet de réduire la densité de défauts à l'interface de collage.

Là encore, un palier peut comporter une rampe et la température de palier proprement dite, température à laquelle le système est maintenu pendant une certaine durée, tous ces paramètres (rampe de température en fonction du temps, températures, durées des paliers) pouvant varier dans des gammes assez larges.

Par exemple :
- une rampe peut être aussi lente que 0,1°C/mn,
- les températures successives peuvent être espacées de 1°C ou de quelques °C seulement,
- la durée d'un palier peut être aussi courte que quelques dixièmes de seconde et aussi longue que quelques heures.

Un tel traitement par paliers permet de monter progressivement la température, par exemple depuis une gamme basse telle que la gamme, déjà mentionnée ci-dessus, de 50°C - 100°C, et favorise l'élimination des sous produits de dégazage de l'interface.

L'un des paliers est par exemple à environ 100°C pendant au moins 3 ou au moins 4 ou au moins 5 heures.

Quel que soit le mode de réalisation de l'invention au moins une des surfaces à assembler peut avoir préalablement subi une étape de préparation en vue de l'assemblage, par exemple une étape de traitement lui conférant un caractère hydrophile ou hydrophobe.

Dans tous les cas, l'assemblage peut être réalisé par collage, sous atmosphère contrôlée.

Les traitements thermiques selon l'invention, par paliers successifs ou cumulatifs, peuvent être réalisés à des températures progressives. Des montées ou des paliers à des températures de plus en plus élevées peuvent être effectués, éventuellement avec des retours à une température plus faible, par exemple la température ambiante, entre deux paliers.

L'invention concerne donc en particulier l'utilisation de technique de traitements thermiques spécifiques, brefs ou longs, mais successifs, à basses températures, de préférence inférieures à 200°C ou 100°C, venant en complément des traitements thermiques standard.

Par exemple, des traitements thermiques spécifiques sont effectués, chaque palier étant d'une durée d'environ deux heures, successivement aux paliers de températures suivants : 50°C, puis 100°C, puis 125°C, puis 150°C, et enfin 200°C.

Selon un autre exemple, des traitements thermiques selon l'invention sont effectués de façon cumulative. Par exemple un premier palier est réalisé, pendant deux heures, à 100°C ; puis, la température est ramenée à la température ambiante, puis maintenue à un deuxième palier, pendant deux heures, à 150°C. Elle est ensuite ramenée à la température ambiante, puis maintenue de nouveau à un troisième palier, pendant deux heures, mais à 200°C. La température est ensuite ramenée à la température ambiante.

Ces traitements thermiques successifs peuvent être en particulier ajustés en modifiant les vitesses (ou rampes) de montée (ou de descente) en température, jusqu'à la température souhaitée.

Avantageusement, on utilisera des vitesses de montée (ou de descente) lentes. Par exemple on choisira des vitesses inférieures à 5°C par minute, ou inférieures à 1° par minute, ou inférieures à 0.1° par minute.

Ces traitements thermiques, successifs ou cumulatifs, peuvent venir en combinaison de préparations de surface efficaces pouvant permettre l'obtention de structures sans défaut à l'interface de collage des surfaces hydrophiles ou hydrophobes. Ces traitements peuvent être une succession de préparation de surface comme des plasmas, ou des recuits rapides,
ou des environnements de collage sous diverses atmosphères et des pressions diverses ou des collages en température.

Des traitements thermiques selon l'invention peuvent être suivis, par exemple de façon ininterrompue, par un ou plusieurs traitements thermiques, à une ou des températures par exemple supérieures aux températures de traitement thermique selon l'invention, notamment en vue d'un renforcement d'énergie (du collage).

L'invention a également pour objet un procédé de réalisation d'un film mince sur un premier substrat, comportant un procédé de réalisation d'un collage entre le premier substrat et un deuxième substrat tel que décrit ci-dessus, puis une étape d'amincissement du deuxième substrat.

L'étape d'amincissement peut être réalisée par amincissement chimique et/ou mécanique, ou encore par fracture du deuxième substrat.

Dans ce dernier cas, le deuxième substrat peut être préalablement implanté par une (ou plusieurs) espèce, avantageusement gazeuse, pour y créer une zone de faiblesse ou de fracture. Cette espèce est de préférence implantée à une dose supérieure à la dose minimum permettant la fracture.

Par exemple, l'espèce peut être de l'hydrogène.

L'implantation peut être de type ionique.

Dans le cas d'une plaque cristalline, par exemple en matériau semi - conducteur tel que du silicium, l'implantation peut être réalisée à une dose supérieure à la dose minimale. La fracture peut alors être induite à une température inférieure à la température normalement nécessaire pour provoquer la fracture à la dose minimale.

Si l'espèce implantée est de l'hydrogène, la dose implantée sera par exemple supérieure ou égale à 6x10⁶ H⁺.cm⁻².

Même pour des doses « standard » (et donc pas uniquement en cas de surdose), un traitement thermique selon l'invention présente un intérêt, notamment pour le procédé « Smart Cut® » en limitant le nombre de défauts.

Un procédé selon l'invention est particulièrement bien adapté à l'assemblage de deux substrats en silicium, ou de deux substrats en (ou couvert de) dioxyde de silicium, ou d'un substrat en (ou couvert de) dioxyde de silicium et d'un substrat en silicium.

Un procédé selon l'invention permet notamment d'obtenir un film d'oxyde, enterré à l'interface de collage, fin (épaisseur inférieure à 50 nm) voire ultra-fin.

Un procédé selon l'invention permet également d'obtenir des couches très fines de Si (épaisseur inférieure à 150 nm) ou de SiO2 (épaisseur inférieure à 50 nm) directement collées sur plaques de Si ou de SiO2.

En outre les surfaces de collage peuvent être diverses prises par exemple parmi des semi-conducteurs (Si, SiGe, Ge, III-V, ...) des conducteurs (Ni, Co, W, Ti, Ta, Pt, Pd, ...) ou des isolants (SiO2, Si3N4, AlN, Al2O3, diamant...) seuls ou en combinaison.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente un couple de substrats devant être assemblés,
- les figures 2 - 4 et 12 représentent diverses évolutions de température en fonction du temps pour divers procédés de traitement thermique selon la présente invention,
- les figures 5A et 5B représentent deux images en microscopie acoustique, l'une (figure 5A) après un traitement thermique standard (400°C/2h), l'autre (figure 5B) après un traitement thermique additionnel à rampe lente, et suivi du même traitement thermique standard 400°C/2h,
- la figure 6 représente l'évolution de la densité de défauts à l'interface, dus au dégazage des espèces, en fonction de la température T d'un traitement thermique de consolidation de collage, avec traitement thermique selon l'invention (carrés), et sans traitement thermique selon l'invention (cercles),
- la figure 7 représente une image en microscopie acoustique de l'interface d'un collage Si - Si après traitement thermique selon l'invention et un traitement thermique de consolidation à 700°C pendant 2h, sans défaut,
- la figure 8 est un exemple de défectivité observée en interférométrie pour des structures présentant des films minces traités uniquement par un procédé « standard »,
- la figure 9 est un exemple de défectivité observée en interférométrie pour une structure présentant un film mince obtenu par un procédé selon l'invention,
- la figure 10 représente un film mince sur un substrat,
- les figures 11A et 11B représentent des étapes d'un procédé pour obtenir une structure telle que celle de la figure 10.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

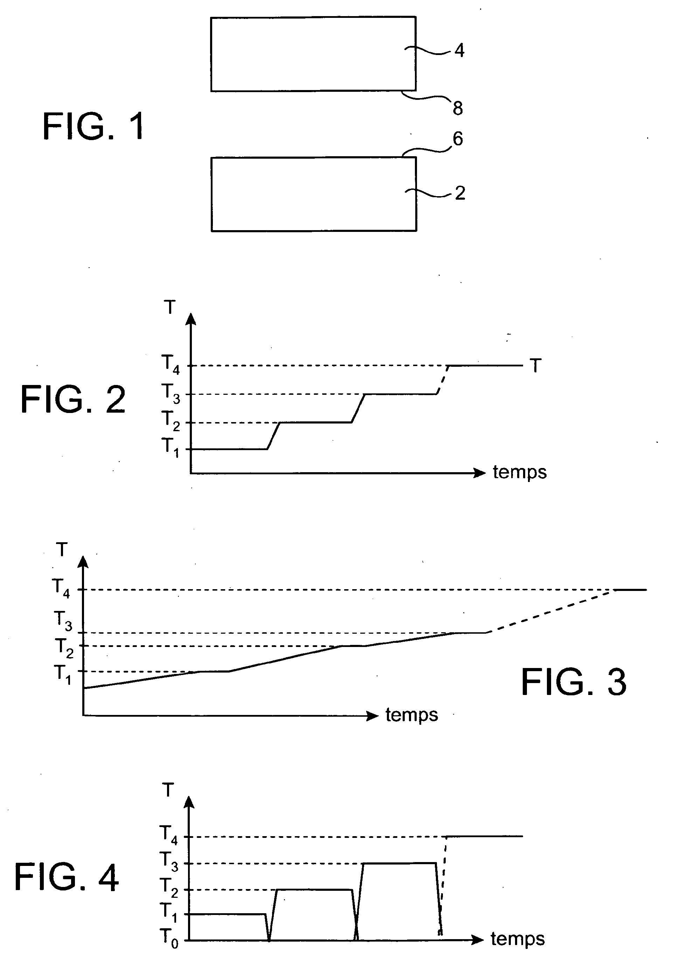

Un exemple de réalisation de l'invention va être donné en liaison avec la figure 1, sur laquelle les références 2, 4 désignent deux substrats à assembler, de surfaces d'assemblage respectives 6, 8.

Ce sont par exemple des plaques de silicium vierges ou recouvertes d'oxyde de silicium fin, d'épaisseur inférieure à 50 nm.

Les surfaces 6, 8 du couple de substrats 2, 4 peuvent avoir subi, préalablement au traitement thermique selon l'invention, une préparation leur donnant un caractère de type hydrophile ou hydrophobe.

Par exemple, une préparation de surface à caractère hydrophile comporte un traitement chimique de type Sulfo-Peroxyde Mixture (SPM) et/ou Ammonium Peroxyde Mixture (APM) et/ou un traitement permettant par exemple un nettoyage, tel qu'un traitement thermique de dégazage (de l'eau et/ou des hydrocarbures), et/ou une activation des surfaces par UV, et/ou Ozone et/ou par plasma, par exemple RIE, ou Micro-ondes, ou ICP..., sous diverses atmosphères.

Le collage peut avoir lieu sous diverses pressions, avec ou sans thermalisation (cette dernière pouvant avoir lieu par exemple entre 200°C et 300°C).

Selon un autre exemple, une préparation de surface à caractère hydrophobe comporte un traitement de désoxydation de surface ; dans le cas d'une surface en silicium, il peut s'agir d'une attaque chimique de type HF liquide.

Les substrats 1 et 2 sont assemblés, l'un sur l'autre par les faces 6, 8 d'assemblage préalablement préparées.

Afin d'améliorer l'élimination des espèces à l'interface de collage, il est également possible de réaliser le collage sous une atmosphère contrôlée (vide, ou atmosphère N₂), avec ou sans thermalisation.

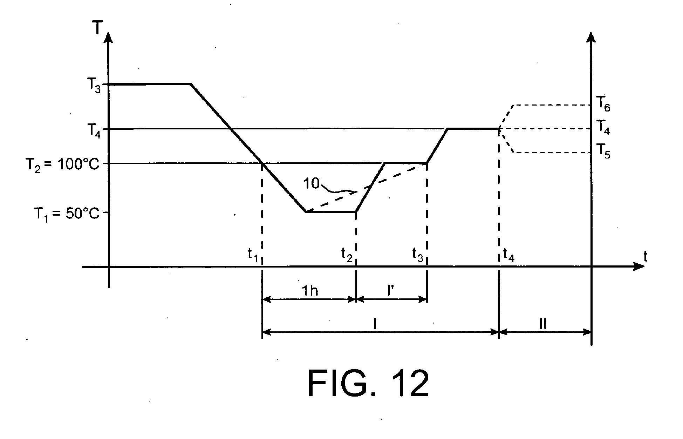

Une fois le collage effectué, la structure est soumise, conformément à l'invention, à un traitement thermique comportant un maintien dans la plage de température 50°C - 100°C pendant au moins une heure. Dans cette plage, la température peut évoluer, ou être constante. Par exemple elle peut être égale à 100°C pendant une heure ou évoluer, à partir de 50°C, suivant une rampe thermique de 50°C/h, passant ainsi à 100°C au bout d'une heure (cas du trait interrompu 10 de la figure 12).

La durée passée entre 50°C et 100°C peut aussi être supérieure à 1 heure, ou à 1,5 h, ou à 2 h, ou à 2,5 h ou à 3 h.

La température est, en outre, maintenue pendant au moins une heure, à une température strictement supérieure à 100°C, par exemple inférieure à 500°C.

Un exemple de traitement selon l'invention comporte au moins un maintien dans la plage de température 50°C - 200°C ou entre 100°C et 200°C ou entre 200°C et 250°C, et ce pendant au moins une heure ou deux heures ou trois heures afin de satisfaire aux conditions énoncées ci-dessus (température entre 50°C et 100°C pendant au moins une heure et, pendant au moins une heure, température strictement supérieure à 100°C, par exemple inférieure à 500°C).

Le système peut préalablement avoir subi des traitements à des températures plus élevées ou plus basses. Par conséquent on peut aussi avoir un traitement préalable à plus de 100°C ou de 150°C ou de 200°C, puis un retour de la température entre 50°C et 100°C, et un traitement selon l'invention avec notamment un maintien dans cette plage 50°C - 100°C pendant au moins une heure ou deux heures ou 3 heures.

Un tel traitement selon l'invention peut être suivi d'un autre traitement, par exemple à température supérieure, en vue d'un renforcement du collage ou d'une fracturation d'un des substrats comme expliqué plus loin.

Le traitement selon l'invention a conduit, outre le maintien pendant au moins une heure entre 50°C et 100°C, à porter le système à des températures supérieures, par exemple à 200°C, et/ou 300°C et/ou d'autres températures (c'est le cas des traitements par paliers expliqués ci-dessous). Un traitement selon l'invention peut en outre être suivi d'un traitement à au moins une température inférieure à la température de l'un des paliers.

Un traitement complémentaire, de type renforcement de collage ou de fracture, ne suit pas nécessairement immédiatement un traitement selon l'invention. Une étape d'un autre traitement intermédiaire peut avoir eu lieu entre temps.

La figure 12 représente un exemple de traitement comportant :
- une phase préliminaire de traitement à la température T3, par exemple pour réaliser le collage,
- puis un traitement selon l'invention (phase I), comportant :
   a) le maintien du système pendant au moins une heure entre 50°C et 100°C (en fait le système est maintenu dans cette gamme de température pendant une durée supérieure à 1 heure, puisqu'il est maintenu à 100°C également pendant la phase I'),
   b) et, dans le cas particulier représenté, une étape de traitement à une température T4, supérieure à 100°C,
- enfin un traitement complémentaire (phase II), par exemple de renforcement de collage, à une température égale, supérieure (T6) ou inférieure (T5) à une des températures du traitement selon l'invention.

La phase I de traitement selon l'invention peut comporter une rampe, représentée en traits interrompus sur la figure 12, au cours de laquelle le système passe lentement de 50°C à 100°C pendant au moins une heure. Le système est également maintenu pendant au moins une heure, à une température strictement supérieure à 100°C, comme le montre la zone située dans la zone I, mais au-delà de I' (entre les instants t3 et t4), ainsi que la zone II.

Un exemple de traitement thermique selon l'invention est justement un traitement par paliers.

Dans la suite, on qualifiera les paliers d'un traitement thermique selon l'invention de :
- successifs, lorsqu'ils s'enchaînent l'un après l'autre, sans retour à la température ambiante ou à une température plus basse (cas par exemple schématisés en figures 2 et 3),
- cumulatifs lorsqu'ils s'enchaînent l'un après l'autre avec un retour, entre deux paliers, à une température plus basse, par exemple la température ambiante (cas par exemple du traitement schématisé en figure 4).

Le traitement thermique selon l'invention pourra consister en une combinaison de paliers successifs et/ou cumulatifs.

Par exemple, pour des collages Si - Si, la basse température des paliers d'un traitement thermique selon l'invention sera inférieure à 200°C et plus avantageusement inférieure à 150°C, par exemple égale à, ou voisine de, 50°C, puis 100°C, puis 125°C, ou 145°C.

Les étapes ou paliers d'un traitement thermique selon l'invention sont longs lorsqu'ils ont des durées au-delà d'une heure ou de deux heures ou, avantageusement, au delà de 5 heures.

La durée d'un palier ou d'une étape d'un traitement thermique selon l'invention inclut à la fois la durée de montée depuis la température ambiante, la durée de maintien à la température du palier et la durée des descentes depuis la température de traitement du palier jusqu'à, par exemple, la température ambiante.

Un traitement thermique selon l'invention, par paliers, peut comporter, comme les traitements expliqués ci-dessus, un maintien dans la plage de température 50°C - 100°C pendant au moins une heure. Dans cette plage, la température peut évoluer, ou être constante. Par exemple elle peut être égale à 100°C pendant une heure ou évoluer, à partir de 50°C, suivant une rampe thermique de 50°C/h, passant ainsi à 100°C au bout d'une heure (cas du trait interrompu 10 de la figure 12).

La durée passée entre 50°C et 100°C peut aussi être supérieure à 1 heure, ou à 1,5 h, ou à 2 h, ou à 2,5 h ou à 3 h.

Un autre traitement selon l'invention, par paliers, comporte un maintien dans la plage de température 50°C - 200°C ou entre 100°C et 200°C ou entre 200°C et 250°C, et ce pendant au moins une heure ou deux heures ou trois heures. On cherchera en outre à satisfaire aux conditions énoncées ci-dessus (température pendant au moins une heure entre 50°C et 100°C et, pendant au moins une heure, strictement supérieure à 100°C, par exemple inférieure à 500°C).

Selon un exemple un traitement des deux substrats 2, 4 de la figure 1 comporte des paliers de température successifs, à des températures basses.

Par exemple ce traitement est réalisé pendant une durée d'environ 5h pour chaque palier, et successivement à des températures de plus en plus élevées. Un premier palier peut être à T1 = 50°C, un second à T2 = 100°C, un troisième à T3 = 150°C, et un quatrième à T4 = 200°C. L'évolution de la température en fonction du temps est alors celle représentée en figure 2. On peut ensuite progresser encore par palier de 100°C, jusqu'à atteindre une température, T, de traitement thermique de renforcement du collage.

Selon une variante on peut mettre en oeuvre une rampe de montée en température très lente permettant d'amener, très doucement, la température au niveau des paliers T1, puis T2, puis T3, puis T4, par exemple avec une pente de 1°C/min, ou même avantageusement de 0,1°C/min. Avantageusement on maintient la température à des paliers thermiques successifs T1, T2 , T3, T4 dès les basses températures, par exemple dès 100°C, chaque palier étant maintenu pendant par exemple 10 heures. Un tel traitement est représenté en figure 3.

Un ou plusieurs traitements thermiques peuvent être ainsi définis, le tout permettant un traitement thermique total selon l'invention.

Un traitement thermique selon l'invention, par paliers successifs ou cumulatifs, peut être suivi d'un traitement thermique de renforcement de l'assemblage des deux substrats, par exemple à une température supérieure à celle des paliers du traitement thermique selon l'invention.

Un autre traitement selon l'invention est représenté en figure 4 : on effectue des paliers à des températures T1, T2, T3, T4, avec retour, entre chaque palier, à une température inférieure T0, par exemple la température ambiante, par exemple encore 20°C.

Ainsi, un traitement thermique cumulatif peut avoir la forme suivante, partant d'une température ambiante (par exemple : 20°C):
- un premier palier d'une durée de 2h à 50°C, suivi d'un retour à une température inférieure (par exemple : température ambiante),
- puis un deuxième palier de 2h à 100°C, suivi d'un retour à une température inférieure (par exemple : température ambiante),
- puis un troisième palier de 2h à 150°C, suivi d'un retour à une température inférieure (par exemple : température ambiante),
- puis un quatrième palier de 2h à 200°C, suivi d'un retour à une température inférieure (par exemple : température ambiante),
- puis un traitement thermique standard de renforcement de collage à une température T, par exemple 400°C, pendant 2h.

Un autre exemple de traitement thermique selon l'invention est une rampe amenant la température du système progressivement de la température ambiante à une température finale, cette rampe étant telle qu'une durée d'au moins une heure est passée dans l'intervalle 50°C - 100°C. La durée passée entre ces deux températures peut aussi être supérieure à 1 heure, ou à 1,5 h, ou à 2 h, ou à 2,5 h ou à 3 h. On complète ensuite par les étapes de traitement selon l'invention (maintien de la température dans la plage strictement supérieure à 100°C et inférieure ou égale à 500°C pendant au moins 1 heure).

Des traitements thermiques selon l'invention ont été effectués avec une préparation de surfaces hydrophiles par voie chimique humide (SPM et APM).

Les effets des divers traitements thermiques selon l'invention peuvent être comparés en terme de densité de défauts.
1) dans le premier cas (tableau 1), ont été comparés:
- un traitement thermique selon l'invention, du type de la figure 3, avec une rampe lente de 1 °C/min, débutant à la température ambiante, avec des paliers dont la durée de chacun est de 10h, à 100°C, puis à 200°C, puis à 300°C, et enfin à 400°C,
- et un traitement thermique de renforcement de collage, dit traitement « standard », quasi isotherme à 400° C.

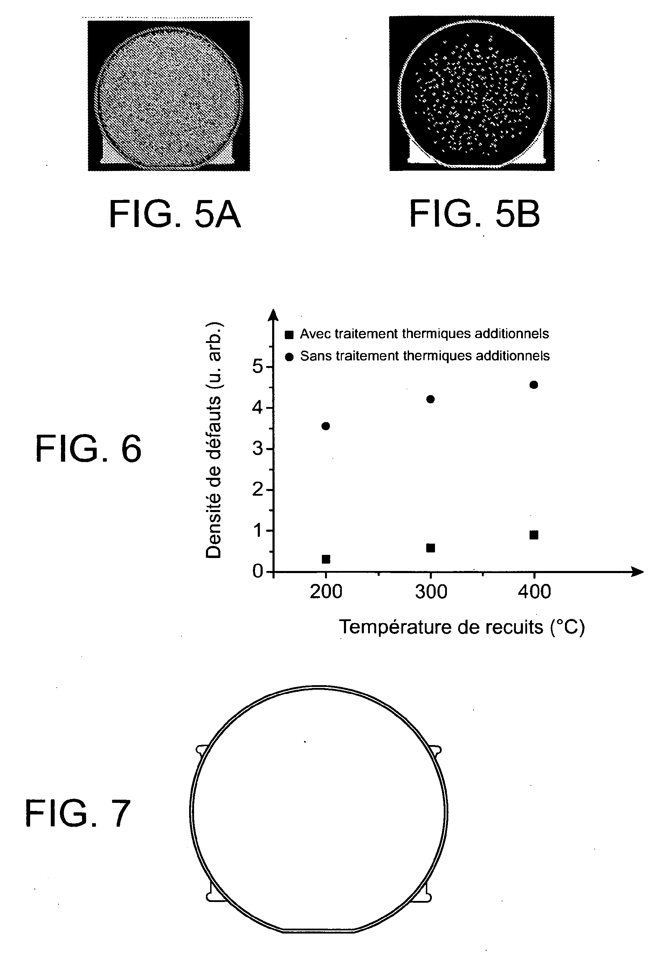

Le tableau I indique une densité de défauts à l'interface de collages nettement inférieure dans le cas du traitement selon l'invention.
Les images présentées en figures 5A et 5B sont des images de l'interface de collage obtenues par microscopie acoustique. En figure 5A, il s'agit d'une image après traitement thermique « standard » uniquement. En figure 5B, il s'agit d'une image après traitement thermique selon l'invention et après le même traitement thermique standard que celui le la figure 5A. La figure 5B montre, par rapport à la figure 5A, une amélioration, avec le traitement selon l'invention, de la défectuosité, d'un facteur supérieur à 8 (les figures 5A et 5B se rapportent aux résultats du tableau I).
La guérison de défauts de collage, à haute température (par exemple supérieure à 1100°C) est donc largement facilitée lors de l'application préalable d'un traitement selon l'invention.
Lorsqu'un tel traitement de guérison à haute température n'est pas possible, par exemple du fait de la présence de composants dans un des substrats, le traitement selon l'invention permet de limiter considérablement la densité de défauts dans l'assemblage final.

**Tableau I**

| | Densité de défauts à l'interface de collage |
|---|---|
| Traitement thermique standard seulement (400°C/2h). | 88 % |
| Traitement thermique additionnel à rampe lente avant le traitement thermique standard à 400°C. | 10,60 % |

2) dans le second cas, ont été comparés :
- un traitement thermique selon l'invention, constitué de paliers longs successifs d'une durée de 5h à 50°C, suivis par 5h à 100°C, suivis par 5h à 150°C, suivis par un traitement thermique à la température T (température de renforcement de collage),
- et un traitement thermique standard quasi
- isotherme à la température T = 200°C (ou 300°C ou 400°C), pendant environ 2h, de renforcement d'interface.

On note une amélioration de la défectuosité d'au moins un facteur 4 grâce au traitement thermique selon l'invention, et ce pour chaque température de traitement thermique standard de renforcement d'interface (à 200°C ou 300°C ou 400°C).

La figure 6 représente l'évolution de la densité de défauts en fonction de la température de recuits, avec traitement selon l'invention (carrés) et sans traitement selon l'invention (cercles). L'exemple est celui d'un collage Si-Si, avec préparation chimique humide (SPM, APM).

D'autres exemples d'application peuvent être donnés.

### Exemple 1 :

En optimisant les préparations de surface préalables, par exemple en préparant les surfaces 6, 8 par plasma micro-ondes en atmosphère d'oxygène et en réalisant un collage des deux surfaces sous vide avec mise en température à 300°C lors du collage, il a été possible d'obtenir un collage Si-Si, sans défaut à l'interface de collage (comme illustré en figure 7) dans les conditions suivantes :
- un traitement thermique selon l'invention est d'abord réalisé, ce traitement comportant une rampe lente de 1°C/min, débutant à la température ambiante, puis ayant des paliers d'une durée de 10h chacun à 100°C, puis à 200°C, puis à 300°C, et ainsi de suite par palier de 100°C jusqu'à la température finale de 700°C,
- un traitement thermique «standard », de renforcement de collage, dans la gamme 600 - 700°C.

La Figure 7 représente une image en microscopie acoustique de cette interface de collage Si-Si, après traitement thermique par palier selon l'invention, suivi d'un traitement de consolidation à 700°C pendant 2h. Cette interface est sans défauts.

### Exemple 2 :

En préparant les surfaces par voie chimique, par exemple avec une attaque par HF en solution, pour qu'elles deviennent hydrophobes, il a été possible, par un traitement thermique selon l'invention, d'obtenir des interfaces de collages sans défaut jusqu'à 500°C et plus. Le traitement thermique selon l'invention est une rampe lente, de 0,15°C/min, débutant à la température ambiante, combinée avec des paliers, chacun d'une durée de 10h, à 100°C, puis à 200°C, puis à 300°C, et ainsi de suite par palier de 100°C jusqu'à la température finale de 500°C.

Diverses autres applications d'un procédé selon l'invention peuvent être mentionnées.

L'utilisation de traitements thermiques additionnels selon l'invention permet de réaliser des structures empilées par collage moléculaire avec un minimum de défauts de collage, voire pas du tout. Parmi les diverses applications, la réalisation de structures comprenant des films fins (par exemple inférieure à 100 µm ou à 1 µm ou à 0,1 µm) est alors possible.

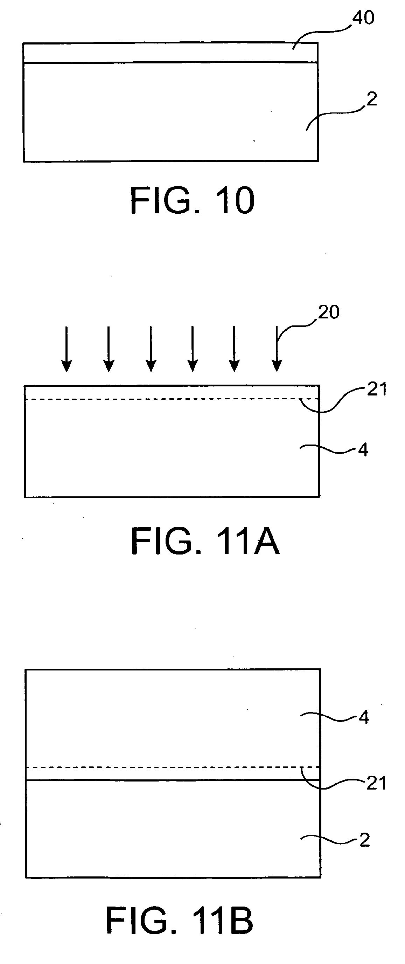

Par exemple, la structure initiale est obtenue par le collage de deux plaques 2, 4 épaisses (cas de la figure 1), suivi d'un traitement thermique par paliers selon l'invention, et éventuellement d'un traitement thermique de renforcement. On peut ensuite utiliser une technique d'amincissement mécanique (rodage, meulage...), et/ou une technique d'amincissement chimique (attaque chimique, lift off...), et/ou d'autres techniques simples ou en combinaison. On obtient alors la structure de la figure 10, avec un substrat 2 et un film mince 40.

Selon un autre exemple, l'une au moins des deux plaques 2, 4 épaisses a une structure cristalline en surface, et on y implante une espèce telle qu'une espèce gazeuse, par exemple par implantation ionique, pour y générer une zone de faiblesse 21 (figure 11A). On réalise ensuite un traitement thermique par paliers selon l'invention, et éventuellement un traitement thermique de renforcement.

On peut ensuite utiliser la technologie connue sous le nom de « Smart Cut » (marque déposée) : après le collage des deux plaques épaisses (figure 11B), on provoque, par exemple lors d'un traitement thermique, une séparation, au niveau de la zone 21 de faiblesse, et le détachement d'un film fin 40 qui reste en adhérence sur la plaque 2 (figure 10).

Le procédé selon l'invention peut également être avantageusement utilisé dans les domaines d'applications suivants:
1. Les réalisations de structures empilées par adhésion moléculaire, comprenant des couches minces ou ultra-minces, d'épaisseur par exemple inférieure à 2 µm ou encore à 0, 1 µm, par exemple la réalisation de structures de types silicium sur isolant (SOI) à films de silicium et d'oxydes enterrés (BOX) fins. En particulier l'épaisseur d'oxyde à l'interface de collage est typiquement inférieure à 50 nm. L'oxyde n'ayant pas la capacité d'absorber les produits de dégazage du collage, les traitements thermiques selon l'invention permettent la disparition de ces produits sans dégradation de l'interface de collage.
2. La réalisation de certaines hétérostructures, obtenues par collage direct, qui supporteraient mal, ou ne supporteraient pas, des traitements thermiques de guérison à hautes températures, par exemple :
   - deux substrats 2, 4 en matériaux à coefficients de dilatation trop différents, par exemple de rapport supérieur à 2 et dont le collage ne peut supporter des traitements thermiques à des températures élevées ; c'est le cas, par exemple, du silicium sur du saphir, dont les coefficients de dilatation thermiques sont respectivement 2,5x10⁻⁶ K⁻¹ et 7x10⁻⁶ K⁻¹,
   - deux substrats ou plaques 2, 4 en matériaux présentant un risque de diffusion d'un élément à travers l'interface de collage ; c'est par exemple le cas de deux plaques 2, 4 de matériau semi-conducteurs (exemple : du silicium) différemment dopées ; selon un exemple l'une est dopée au bore et l'autre au phosphore,
   - deux substrats ou plaques 2, 4 à empiler pouvant être dégradées par un traitement thermique à température élevée ; par exemple l'une des plaques est déjà partiellement processée, ou comporte déjà des composants, et ne peut donc être exposée à une température supérieure à 450°C (cas d'un niveau métallique d'un composant sur du silicium).

Le procédé selon l'invention peut également être avantageusement utilisé dans l'application suivante.

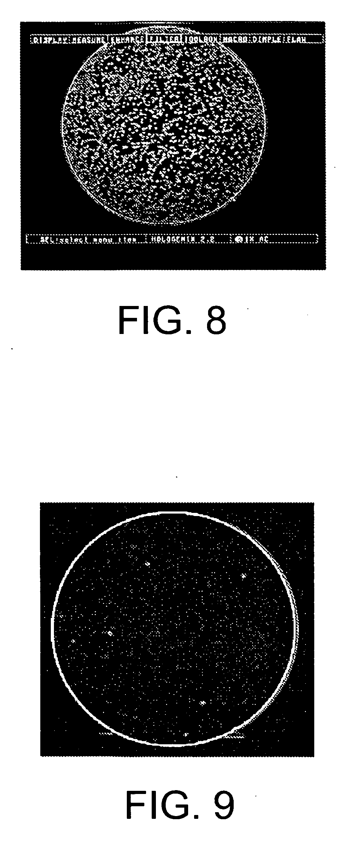

Selon les procédés habituels référencés comme « standards », la fabrication de films en couches minces peut s'avérer complexe lorsque l'épaisseur des films devient très faible, de l'ordre de quelques nanomètres, ou comprise entre 1 nm et 10 µm. En effet, des défauts de fabrication apparaissent sur ou dans les films fabriqués (trous, plis, bulles/cloques, etc....) lors de la fabrication des films ou lors des recuits qui permettent de stabiliser les nouvelles structures fabriquées. La figure 8 est un exemple de défectivité, observée avec un appareil « Magic Mirror » de Hologenix, pour des structures présentant des films minces traités par le procédé « standard ». Plusieurs centaines de défauts rendent la structure « inutilisable » industriellement.

Ce problème concerne notamment la fabrication de matériaux de type SOI (silicon-on-insulator ou silicum sur isolant : structure Si/SiO2/Si) ; Il concerne également la fabrication de matériaux de type SIS (pour Semiconducteur-Isolant-Support) comportant une couche mince de semi-conducteur (de quelques nanomètres, par exemple 5 nm, à quelques µm, par exemple 5 µm ou 10 µm, d'épaisseur), qui conduit le courant électrique selon certaines conditions électriques (tension/courant par exemple), sur un isolant. Ce dernier permet d'isoler le semi-conducteur en couche mince par rapport au support sous-jacent (SiO2, Si3N4, diamant, etc....). Le support, quant à lui, permet de maintenir les deux précédentes couches minces empilées pour créer la structure finale industrialisée.

Selon l'invention, on résout les problèmes de défectivité inhérents au procédé dit « standard ».

Dans le cas d'un traitement thermique induisant une fracture on choisira soigneusement la température d'entrée des plaques dans le four de détachement: avantageusement, les plaques seront introduites à une température supérieure à l'ambiante, par exemple 50°C ou 80°C ou 100°C, ou comprise entre 50°C et 80°C ou entre 80°C et 100°C, par exemple à la température du premier palier en température lors d'un traitement thermique par palier, par exemple à 50°C ou 80°C ou 100°C. L'application d'un temps assez long, de l'ordre de au moins 3h ou au moins 4h ou au moins 5 h, à une ou plusieurs température(s) relativement basse(s), par exemple de l'ordre de 50°C ou 80°C ou 100°C ou 150°C, ou par exemple comprise entre 50°C et 80°C ou entre 80°C et 100°C ou entre 100°C et 150°C permet de diminuer le nombre de défauts pour des plaques qui subissent une activation plasma avant collage.

La fracture de substrat peut être obtenue par la technologie Smart Cut^{™}, ou de fracture de substrat, décrite par exemple dans « Silicon Wafer Bonding Technology », Edited by SS Iyer and AJ Auberton-Hervé, INSPEC, Institute of Eletrcial Engineers, London, 2002, Chapitre 3, p. 35 et suivantes, par B.Aspar et A.J. Auberton-Hervé, de la manière suivante :

On peut implanter tout d'abord à une dose bien supérieure à celle généralement requise - au moins 20 % de plus (par exemple une dose de 8x10¹⁶ H⁺.cm⁻² pour de l'hydrogène implanté dans du silicium oxydé alors que le procédé habituel se satisferait de 5x10¹⁶ H⁺.cm⁻²).

On peut ensuite utiliser le recuit précédemment décrit avec une entrée dans un four à basse température (inférieure à 100°C). Des rampes lentes et longues de montée en température (0.25°C/min par exemple) permettent la libération de structure en films minces de type « Smart Cut » à plus basse température que le procédé habituel (par exemple dans le cas de l'hydrogène dans le silicium à une température inférieure à 400°C, par exemple 300°C, alors que la fracture s'opère habituellement à 500°C).

Ce procédé (surdose de l'espèce implantée en profondeur pour transfert à plus basse température opérant un recuit lent et long) permet la fabrication d'une structure de quelques nanomètres d'épaisseurs avec un nombre minimisé de défauts.

La fracture est donc obtenue à plus basse température que pour le procédé standard. Il est donc possible de réaliser, par exemple à des températures inférieures à, ou de l'ordre de, 400°C, par exemple 300°C, une fracture au sein de structures qui ne sont pas compatibles avec les températures habituelles de fracture (autour de 500°C). C'est le cas notamment pour une structure processée (c'est-à-dire comportant, dans
ou sur le film mince à transférer ou le substrat récepteur, tout ou partie de composants électroniques (CMOS par exemple) ou autres (MEMS, MOEMS...) ou encore comportant des interconnexions métalliques...).

Ainsi, sur la figure 9, on constate qu'une couche mince obtenue par un procédé selon l'invention contient moins de 10 défauts alors que plus de mille défauts sont observés en procédé « standard » (Fig.8).

Par conséquent, selon un mode de réalisation de l'invention, on sélectionne des conditions d'implantations ioniques favorables : espèce implantée surdosée, par exemple à une dose supérieure à la dose minimum permettant une fracture (supérieure à 6x10¹⁶ H⁺.cm⁻² ou à 7x10¹⁶ H⁺.cm⁻² par exemple pour l'hydrogène). Ces conditions permettent, à basse température, de réaliser des structures présentant de très faibles épaisseurs de films (de quelques nanomètres) avec une densité de défauts considérablement réduite, de plusieurs centaines ou plusieurs milliers à quelques unités seulement, voire sans défaut.

On peut ainsi réaliser des structures de type film mince (semi-conducteur par exemple) sur film mince (Isolant ou non), le tout sur un support.

Un exemple d'application d'un procédé de recuit selon l'invention est le suivant. On cherche, comme expliqué ci-dessus, à surdoser une implantation ionique ou atomique, pour effectuer une fracture à plus basse température que dans les procédés connus.

Selon cet exemple, on implante une plaque de Silicium oxydée avec des ions H⁺ à une dose de 8x10¹⁶ H⁺.cm⁻² et une énergie de 50 keV.

On la colle à une autre plaque Si, par une couche d'oxyde, et on obtient ainsi une structure Si/SiO₂/Si, avec par exemple une épaisseur d'oxyde de 12nm.

On opère ensuite le cycle de recuits suivant:
- la température est initialement à 100°C, puis on maintient l'isotherme 100°C pendant 10h,
- on réalise ensuite une rampe à 0.25°C/min, jusqu'à atteindre l'isotherme 200°C, maintenu pendant 10h,
- on réalise ensuite une rampe à 0.25°C/min, jusqu'à atteindre l'isotherme 300°C, maintenu pendant 10h,
- on réalise ensuite de nouveau une rampe à 0.25°C/min jusqu'à atteindre l'isotherme à 400°C, maintenu pendant 10h ; la fracturation du substrat est réalisée pendant cette étape,
- on réalise ensuite de nouveau une rampe à - 0.25°C/min, et on atteint une température de sortie à 200°C.

Selon une variante on opère une implantation à une dose de 8x10¹⁶ H⁺.cm⁻² à 76 keV, ce qui va permettre le transfert de 700 nanomètres de Si.

Le cycle de recuits est le suivant :
- la température est initialement à 100°C, puis on maintient l'isotherme 100°C pendant 10h,
- on réalise ensuite une rampe à 0.25°C/min jusqu'à atteindre l'isotherme à 200°C, maintenu pendant 10h,
- on réalise ensuite une rampe à 0.25°C/min jusqu'à atteindre l'isotherme à 300°C, maintenu pendant 15 h ; la fracturation du substrat est réalisée pendant cette étape,
- on réalise ensuite de nouveau une rampe à - 0.25°C/min, et on atteint une température de sortie à 200°C.

Selon encore un autre exemple on opère une implantation à une dose de 6x10¹⁶ ions H⁺ à 210 keV à travers un oxyde thermique, ce qui va permettre le transfert de 1, 56 µm de Si.

On sélectionne deux plaquettes ou substrats 2, 4 de Silicium, dont l'une est oxydée en surface, par exemple sur une épaisseur de 0,4 µm. Cette plaquette oxydée est ensuite implantée d'ions H+, avec la dose et l'énergie indiquées ci-dessus, puis elle est désoxydée. La zone implantée forme une zone de fracture telle la zone 21 de la figure 11A, qui permettra ultérieurement de séparer une couche mince du reste du substrat.

Les deux plaquettes sont ensuite nettoyées par chimie RCA et leur surface est activée par plasma.

Les plaquettes sont ensuite mises sous vide (10⁻³ mbar) avec une montée en température à 300°C (rampe thermique de 20°C/min). Elles sont maintenues à cette température pendant 10 mn.

Le collage est alors induit à cette température pendant une durée de deux heures, puis le système est ramené à température ambiante.

Un traitement selon l'invention est alors appliqué, avec une rampe de température de 1°/mn, depuis la température ambiante jusqu'à 100°C. On réalise ensuite :
- un maintien à 100°C pendant 10h,
- puis un palier à 200°C pendant 10h,
- puis un palier à 300°C pendant 10h,
- puis un palier à 400°C pendant 10h.

Le traitement de fracture est alors induit pendant le dernier palier à 400°C, aboutissant à un transfert d'un film de silicium de 1, 56 µm.

Dans cet exemple le système est soumis, avant traitement thermique selon l'invention, à un traitement à température supérieur à 100°C.

L'invention concerne également le cas de doses d'implantation « standard » (et donc pas uniquement des cas de surdose comme pour les exemples déjà donnés); un traitement thermique selon l'invention présente alors un intérêt pour la mise en oeuvre du procédé « Smart Cut® », en limitant le nombre de défauts. Un exemple va en être donné, qui montre le recuit de décollement de plaques collées, en vue d'un transfert selon le procédé « Smart Cut^{™} » :
- la plaque donneuse de silicium a une couche d'oxyde de l'ordre de 50 nm d'épaisseur,
- elle est activée par traitement par plasma 02, à 535 W pendant 45 s,
- elle est implantée avec de l'hydrogène à une dose de l'ordre de 10¹⁶ ions H⁺ / cm2 et une énergie de l'ordre de 30keV.
- le recuit de décollement est réalisé par application aux plaques d'une température d'environ 100°C, pendant au moins 5 h, puis une montée en température de 0.5°C/min jusqu'à 200°C, puis un maintien pendant 2h à 200°C et, enfin, une montée en température de 0.5°C/min jusqu'à 500°C.

Le transfert de la couche sur la plaque réceptrice est ainsi réalisé avec un nombre de défauts de type picots inférieur à 5.

Dans toutes les expériences décrites et les exemples décrits, aucune force mécanique supplémentaire n'est appliquée pour effectuer la fracture du substrat implanté.

Dans un procédé selon l'invention, quel qu'en soit le mode de réalisation au moins l'un des deux substrats peut comporter au moins un composant.

Dans un procédé selon l'invention, quel qu'en soit le mode de réalisation, le collage peut être réalisé sous une atmosphère contrôlée, sous pression contrôlée, avec ou sans thermalisation.

Le film mince obtenu par un procédé selon l'invention peut avoir une épaisseur inférieure à 1 µm ou à 100 nm ou à 50 nm.

Dans un procédé selon l'invention, une espèce atomique ou ionique peut implantée à une dose supérieure à la dose minimale permettant la fracture, cette dernière étant effectuée à une température inférieure ou égale à la température habituellement associée à la dose minimale. Par exemple, la fracture est effectuée à une ou plusieurs température(s) comprise entre 50°C et 150°C, pendant au moins 3 heures.

## Revendications

1. Procédé de réalisation d'un collage entre un premier et un deuxième substrats (2, 4), comportant :
a) une étape de préparation des surfaces (6, 8) à assembler,
b) un assemblage de ces deux surfaces, par collage moléculaire direct,
c) une étape de traitement thermique, comportant au moins un maintien de la température dans la plage 50°C - 100°C pendant au moins une heure, puis un maintien de la température dans la plage strictement supérieure à 100°C et inférieure ou égale à 500°C pendant au moins 1 heure.

2. Procédé selon la revendication 1, l'étape c) comportant un passage par des paliers de température successifs et/ou cumulatifs.

3. Procédé selon la revendication 2, les paliers étant successifs, sans retour à température ambiante ou étant cumulatifs, avec, entre deux paliers de température successifs, un retour à une température inférieure aux températures des deux paliers.

4. Procédé selon la revendication 3, les paliers étant cumulatifs, avec, entre deux paliers de température successifs, un retour à une température inférieure aux températures des deux paliers, les températures inférieures entre deux paliers successifs pouvant être toutes identiques, par exemple les températures inférieures entre deux paliers successifs sont toutes égales à la température ambiante.

5. Procédé selon l'une des revendications 1 à 4, les paliers étant réalisés à des températures croissantes en fonction du temps.

6. Procédé selon l'une des revendications 2 à 5, au moins un des paliers comportant une vitesse de montée en température inférieure à 5°C par minute.

7. Procédé selon l'une des revendications 1 à 10, au moins un des deux substrats, ou les deux substrats, étant en matériau semi - conducteur, par exemple au moins un des deux substrats, ou les deux substrats, est/sont en silicium.

8. Procédé selon l'une des revendications 1 à 6, les deux substrats étant au moins en surface dioxyde de silicium, ou l'un des deux substrats est au moins en surface en dioxyde de silicium et l'autre est en silicium.

9. Procédé selon l'une des revendications 1 à 8, les deux substrats étant en matériaux à coefficients de dilatation thermiques différents.

10. Procédé selon l'une des revendications 1 à 9, la température en fin d'étape c) étant une température de traitement thermique de renforcement du collage moléculaire et/ou d'induction d'une fracture dans un substrat.

11. Procédé selon l'une des revendications 1 à 10, comportant en outre une étape :
d) de renforcement du collage par adhésion moléculaire et/ou d'induction d'une fracture dans un substrat.

12. Procédé selon la revendication 11 :
- dans lequel l'étape d) est réalisée par traitement thermique à une température supérieure aux températures de l'étape c) ou dans lequel ;
- ou dans lequel, au cours de l'étape c) on amène le système, par exemple par un ou plusieurs paliers de température, à une température supérieure à 100°C, l'étape d) étant réalisée à au moins une température supérieure, ou égale, ou inférieure à cette température supérieure à 100°C.

13. Procédé de réalisation d'un film mince sur un premier substrat comportant un procédé de réalisation d'un collage entre le premier substrat et un deuxième substrat (2, 4) selon l'une des revendications 1 à 12, puis une étape d'amincissement du deuxième substrat.

14. Procédé selon la revendication 13, l'étape d'amincissement étant réalisée par amincissement chimique et/ou mécanique ou par fracture du deuxième substrat.

15. Procédé selon la revendication 14, le deuxième substrat étant préalablement implanté par une ou plusieurs espèces atomiques ou ioniques pour y créer une zone de faiblesse, l'espèce atomique ou ionique étant par exemple implantée à une dose supérieure à la dose minimale permettant la fracture, cette dernière étant effectuée à une température inférieure ou égale à la température habituellement associée à la dose minimale.

## Claims

1. Process for producing a bond between a first and a second substrates (2, 4), **characterised in that** it comprises:
a) a step of preparing surfaces (6, 8) to be assembled,
b) an assembly of these two surfaces, by direct molecular bonding,
c) a heat treatment step involving at least maintaining the temperature within the range of 50°C to 100°C for at least one hour, then maintaining the temperature in the range strictly above 100°C and below or equal to 500°C for at least one hour.

2. Process according to claim 1, step c) comprising a passage through successive and/or cumulative temperature levels.

3. Process according to claim 2, the levels being successive, without a return to room temperature or being cumulative, with, between two successive temperature levels, a return to a temperature below the temperatures of two levels.

4. Process according to claim 3, the levels being cumulative, with, between two successive temperature levels, a return to a temperature below the temperatures of two levels, the lower temperatures between two successive levels being all identical, for example the lower temperatures between two successive levels being all equal to room temperature.

5. Process according to one of claims 1 to 4, the levels being produced at temperatures increasing over time.

6. Process according to one of claims 2 to 5, at least one of the levels comprising a rate of temperature increase below 5°C per minute.

7. Process according to one of claims 1 to 6, at least one of the two substrates, or both substrates, being a semiconductor material, for example at least one of the two substrates, or both substrates, being made of silicon.

8. Process according to one of claims 1. to 6, the two substrates at least having a silicon dioxide surface, or one of the two substrates having at least a surface of silicon dioxide and the other is silicon.

9. Process according to one of claims 1 to 8, the two substrates being made of materials with different heat expansion coefficients.

10. Process according to one of claims 1 to 9, the temperature at the end of step c) being a heat treatment temperature for reinforcing molecular bonding and/or inducing a fracture in a substrate.

11. Process according to one of claims 1 to 10, also comprising a step:
d) of reinforcing the bonding by molecular adhesion and/or inducing a fracture in a substrate.

12. Process according to claim 11:
- wherein step d) is performed by a heat treatment at a temperature above the temperatures of step c),
- or wherein, during step c), the system is brought, for example by one or more temperature levels, to a temperature above 100°C, with step d) being performed at least at a temperature above, or equal, or below this temperature above 100°C.

13. Process for producing a thin film on a first substrate, comprising a process for producing a bond between the first substrate and a second substrate (2, 4) according to one of claims 1 to 12, then a step of thinning the second substrate.

14. Process according to claim 13, the thinning step being performed by chemical and/or mechanical thinning or by fracturing the second substrate.

15. Process according to claim 14, the second substrate being pre-implanted by one or more atomic or ionic species in order to create in it a weakness zone, the atomic or ionic species being for example implanted at a dose above the minimum dose enabling the fracture, which is performed at a temperature below or equal to the temperature normally associated with the minimum dose.

## Patentansprüche

1. Verfahren zum Assemblieren eines ersten und eines zweiten Substrats (2, 4), umfassend:
a) einen Schritt zur Präparation der zu assemblierenden Oberflächen (6, 8),
b) ein Assemblieren dieser beiden Oberflächen durch direkte Molekuiarhaftung,
c) einen Wärmebehandlungsschritt mit wenigstens einer Aufrechterhaltung der Temperatur in dem Bereich 50°C - 100°C während wenigstens einer Stunde, dann einer Aufrechterhaltung der Temperatur in dem Bereich strikt über 100°C und unter oder gleich 500°C während wenigstens 1 Stunde.

2. Verfahren nach Anspruch 1, wobei der Schritt c) ein Durchlaufen sukzessiver und/oder kumulativer Temperaturstufen umfasst.

3. Verfahren nach Anspruch 2, wobei die Stufen sukzessiv sind, ohne Rückkehr zur Umgebungstemperatur, oder kumulativ sind, mit einer Rückkehr zwischen zwei sukzessiven Temperaturstufen zu einer Temperatur, die niedriger ist als die Temperaturen der beiden Stufen.

4. Verfahren nach Anspruch 3, wobei - wenn die Stufen kumulativ sind, mit einer Rückkehr zwischen zwei sukzessiven Temperaturstufen zu einer Temperatur, die niedriger ist als die Temperaturen der beiden Stufen, - die niedrigeren Temperaturen zwischen zwei sukzessiven Stufen gleich sein können; zum Beispiel sind alle niedrigeren Temperaturen zwischen zwei aufeinanderfolgenden Stufen gleich der Umgebungstemperatur.

5. Verfahren nach einem der Ansprüche 1 bis 4, wobei die Stufen bei zeitabhängig zunehmenden Temperaturen realisiert werden.

6. Verfahren nach einem der Ansprüche 2 bis 5, wobei wenigstens eine der Stufen eine Temperaturanstiegsgeschwindigkeit unter 5°C pro Minute umfasst.

7. Verfahren nach einem der Ansprüche 1 bis 6, bei dem wenigstens eines der beiden Substrate oder beide Substrate aus einem Halbleitermaterial sind; zum Beispiel ist/sind wenigstens eines der beiden Substrate oder beide Substrate aus Silicium.

8. Verfahren nach einem der Ansprüche 1 bis 6, bei dem beide Substrate wenigstens an der Oberfläche aus Siliciumdioxid sind, oder eines der beiden Substrate wenigstens an der Oberfläche aus Siliciumdioxid ist und das andere aus Silicium.

9. Verfahren nach einem der Ansprüche 1 bis 8, wobei die beiden Substrate aus Materialien mit uriterschiedlichen Wärmedehnungskoeffizienten sind.

10. Verfahren nach einem der Ansprüche 1 bis 9, wobei die Temperatur am Ende des Schritts c) eine Temperatur einer Wärmebehandlung zum Verstärken der Molekularhaftung und/oder zum Induzieren einer Frakturierung eines Substrats ist.

11. Verfahren nach einem der Ansprüche 1 bis 10, mit außerdem einem Schritt
d) zum Verstärken der Haftung durch Molekularadhäsion und/oder zum Induzieren einer Frakturierung eines Substrats.

12. Verfahren nach Anspruch 11:
- in dem der Schritt d) durch Wärmebehandlung bei einer Temperatur über den Temperaturen des Schritt c) realisiert wird;
- oder in dem man das System im Laufe des Schritts c), zum Beispiel durch eine oder mehrere Temperaturstufen, auf eine Temperatur > 100°C bringt, wobei der Schritt d) mit wenigstens einer Temperatur höher als oder gleich wie oder niedriger als besagte >100°C-Temperatur durchgeführt wird.

13. Verfahren zur Herstellung einer dünne Schicht auf einem ersten Substrat, ein Verfahren zur Realisierung einer Haftung zwischen dem ersten Substrat und einem zweiten Substrat (2, 4) nach einem der Ansprüche 1 bis 12 und dann einen Schritt zur Dünnung des zweiten Substrats umfassend.

14. Verfahren nach Anspruch 13, wobei der Dünnungsschritt durch chemisches und/oder mechanisches Dünne oder durch Frakturieren des zweiten Substrats realisiert wird.

15. Verfahren nach Anspruch 14, wobei das zweite Substrat im Voraus mit einer oder mehreren atomaren oder ionischen Spezies implantiert wird, um in ihm eine geschwächte Zone zu bilden, und die atomare oder ionische Spezies zum Beispiel mit einer Dosis implantiert wird, die höher als die minimale das Frakturieren ermöglichende Dosis ist, wobei dieses Frakturieren bei einer Temperatur durchgeführt wird, die niedriger oder gleich der üblicherweise mit der minimalen Dosis verknüpften Temperatur ist.
